(19) Europäisches Patentamt

European Patent Office

Office européen des brevets

(11) Veröffentlichungsnummer: **0 241 973 B1**

# (12) EUROPÄISCHE PATENTSCHRIFT

(45) Veröffentlichungstag der Patentschrift: **09.12.92**

(21) Anmeldenummer: **87200573.1**

(22) Anmeldetag: **26.03.87**

(51) Int. Cl.⁵: **B23B 27/04**

(54) **Schneideinsatz zur spanabhebenden Bearbeitung.**

(30) Priorität: **14.04.86 AT 958/86**

(43) Veröffentlichungstag der Anmeldung:
**21.10.87 Patentblatt 87/43**

(45) Bekanntmachung des Hinweises auf die
Patenterteilung:
**09.12.92 Patentblatt 92/50**

(84) Benannte Vertragsstaaten:
**BE CH DE ES FR GB IT LI NL SE**

(56) Entgegenhaltungen:
**EP-A- 0 057 625        DE-A- 2 359 892**
**DE-A- 3 133 029        DE-B- 1 950 037**
**DE-B- 2 548 870        SU-A- 831 388**

(73) Patentinhaber: **PLANSEE TIZIT GESELL-
SCHAFT M.B.H.**

**A-6600 Reutte/Tirol(AT)**

(72) Erfinder: **Maier, Johann
Innerwand 11
A-6600 Pflach(AT)**

(74) Vertreter: **Lohnert, Wolfgang, Dr.
Metallwerk Plansee GmbH
A-6600 Reutte, Tirol(AT)**

**Beschreibung**

Die Erfindung betrifft einen Schneideinsatz der Stechbreite D zum Einstechen Von Nuten mit von einer Spanfläche und von einer Freifläche begrenzter Schneidkante, wobei die Schneidkante übergangslos an eine entsprechend geformte Spanfläche anschließt, wobei über die Stechbreite D die Ausgestaltungen von freifläche und Schneidkante derart aufeinander angepaßt sind, daß die senkrechte Projektion der Schneidkante auf eine Ebene zumindest näherungsweise eine Gerade ergibt und wobei die Normale zur Ebene mit der Freifläche konstanter Neigung den für die Zerspanung vorgegebenen Freiwinkel einschließt.

Schneideinsätze sind beispielsweise in der DE-OS 23 59 892 sowie in der DE-AS 19 50 037 beschrieben. Der Schneideinsatz entsprechend der DE-OS 23 59 892 weist eine konkav verlaufende Schneidkante mit entsprechend geformter Spanfläche auf. Durch diese spezielle Ausgestaltung wird eine gute Spanquerstauchung erreicht, so daß sich die Späne in der erzeugten Bearbeitungsnut weder verklemmen noch anbacken und leicht brechen. Der Schneideinsatz entsprechend der DE-AS 19 50 037 weist eine gegliederte Schneidkante ganz spezieller Konfiguration auf, durch die jeder ablaufende Span in seiner Breite unterteilt werden soll, so daß ein besserer Spanablauf und eine geringere Wärmebelastung des Schneideinsatzes bewirkt werden soll.

Bei beiden Schneideinsätzen ist nachteilig, daß sich durch die spezielle Form der Schneidkante ein Nutengrund der Bearbeitungsnut ergibt, der nicht gerade, sondern angepaßt an die Schneidkantenform verläuft. Aus diesem Grund sind diese Schneideinsätze in erster Linie nur zum Abstechen geeignet. Einstecharbeiten, die eine Nut mit möglichst geradem Nutengrund erfordern, sind mit diesen Schneideinsätzen nicht möglich. Um die Vorteile der eingangs aufgeführten Schneideinsätze in bezug auf ihre Spanbildung beibehalten zu können und die Einsätze trotzdem auch für Einstecharbeiten unter Gewährleistung eines geraden Nutengrundes einsetzen zu können, ist man in der Vergangenheit dazu übergegangen, die Schneidkante selbst gerade auszuführen und erst angrenzend an eine gewisse Schneidkantenfase die Spanfläche so auszubilden, daß die gewünschte Spanbildung erreicht wird. Ein derartiger Schneideinsatz ist beispielsweise in der DE-OS 31 33 029 dargestellt.

Nachteilig bei dieser Art von Schneideinsätzen ist, daß der Span erst im Bereich nach der Schneidkantenfase verformt wird, so daß es teilweise wiederum zu einer ungenügenden Spanverformung und damit Festklemmen der Späne in der Bearbeitungsnut kommen kann.

Die SU-A-831388 beschreibt einen Schneideinsatz zum Einstechen von Nuten der Breite D mit drei eigenständigen, gleichzeitig im Schneideinsatz befindlichen Schneiden. Die jeweils geraden, parallel zur Werkstückoberfläche verlaufenden Schneidkanten einer jeden Schneide, bzw. Teilschneide grenzen nicht aneinander. Vielmehr ist die mittlere, parallel zur Werkstückoberfläche verlaufende Teilschneide gegenüber den anderen Teilschneiden tiefergesetzt. Auf diese Art und Weise kommt es zu einem dreigeteilten Span, der in der Bearbeitungsnut nicht festklemmt. Um bei der Bearbeitung einen geraden Nutengrund zu erreichen wird dort vorgeschlagen, die Schneidkante der mittleren Teilschneide gleichzeitig um eine entsprechende Länge nach vorne zu versetzen.

Nachteilig bei einem derartigen Schneideinsatz ist, daß der Nutengrund zwar gerade verläuft, durch die voneinander abgesetzten Schneidkanten der Teilschneiden jedoch unvermeidlich Unebenheiten in der Bearbeitungsfläche aufweist. Weiters ist der Rüstaufwand für die exakte Justierung des Schneideinsatzes zur Erzielung eines geraden Nutengrundes so groß, daß die angeführten Optimalbedingungen in Praxis regelmäßig nicht genutzt werden und zusätzliche Unebenheiten des Nutengrundes die Folge sind.

Der Erfindung liegt die Aufgabe zugrunde, einen Schneideinsatz der eingangs genannten Art zu schaffen, der eine optimale Spanverformung ermöglicht und der gleichzeitig eine Bearbeitungsfläche des Nutengrundes ergibt, die trotz gekrümmter Schneidkante über die gesamte Stechbreite gerade verläuft, und keinerlei Kerben oder Unebenheiten aufweist.

Diese Aufgabe wird erfindungsgemäß dadurch gelöst, daß sich die Schneidkante Kontinuierlich über die gesamte Stechbreite D erstreckt und in Stirnansicht einen konkav gekrümmten Schneidkanten-Abschnitt aufweist.

Während mit einem Schneideinsatz gemäß dem nächstliegenden Stand der Technik der allgemein bestehenden Forderung nach einem geraden Nutengrund im Werkstück zwar formal, in Praxis aber nur ungenügend entsprochen wird, stellt der Schneideinsatz gemäß vorliegender Erfindung eine wesentlich verbesserte, zeitgemäße Lösung dar.

Die Lösung ist insofern zeitgemäß, als heutzutage fast ausschließlich Stecheinsätze mit gekrümmten Spanmulden Verwendung finden. In der Ansicht vom zu bearbeitenden Werkstück aus weisen Spanmulden regelmäßig eine konkave Krümmung auf - entweder in einem Zentralbereich oder über die gesamte Spanbreite. In Verbindung mit den bekannten Vorteilen einer unmittelbar an die Schneidkante angrenzenden Spanmulde ist dann auch die Schneidkante zumindest in einem zentralen Schneidkanten-Abschnitt gekrümmt auszugestalten.

Die allgemein gültige Forderung nach geradem Nutengrund wird von Schneideinsätzen nach dem Stand der Technik nur für Schneiden mit geraden Schneidkanten gelöst. Derartig bekannte Schneideinsätze sind daher nicht geeignet, in naheliegender Weise einen Lösungsansatz für Schneideinsätze mit einem gekrümmten Schneidkanten-Abschnitt zu geben.

Bei den erfindungsgemäßen Schneideinsätzen zum Einstechen von Nuten wird eine Bearbeitungsnut mit einem parallel zur Schneidkante verlaufenden geraden Nutengrund ermöglicht, ohne daß Kompromisse im Hinblick auf die optimale Spanbildung eingegangen werden müssen und ohne daß Kerben am Nutengrund auftreten. Derartige Schneideinsätze sind daher hervorragend für Einstecharbeiten geeignet.

Die erfindungsgemäßen Schneideinsätze sind mit modernen Schleifeinrichtungen ohne Schwierigkeiten herstellbar.

Der Gegenstand der Erfindung wird im folgenden anhand der Figuren näher erläutert.

Es zeigen:

Figur 1 einen Schneideinsatz zum Einstechen entsprechend der Erfindung in Seitenansicht

Figur 2a - 2c den Schneideinsatz nach Figur 1 in verschiedenen Ansichten A - C

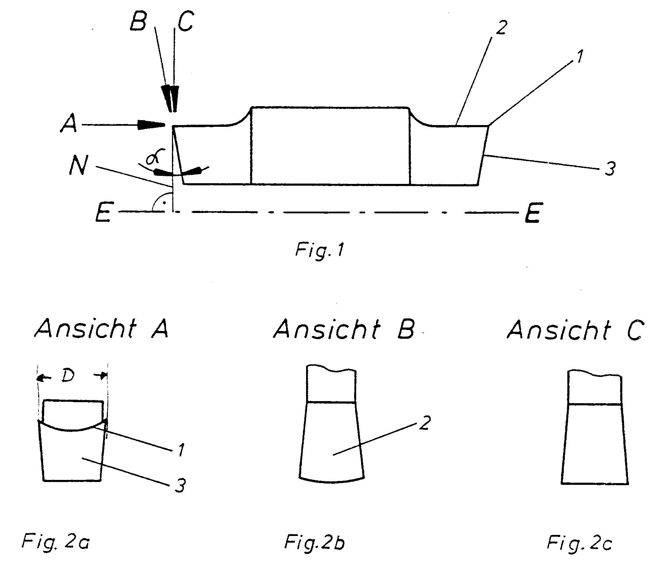

Die Figuren 1 und 2 zeigen eine zweiseitig verwendbare Wendeschneidplatte zum Einstechen. Die Schneidkante -1- verläuft in Ansicht A auf die Stirnseite des Schneideinsatzes gesehen jeweils konkav. Anschließend an die Schneidkante -1- schließt sich übergangslos eine entsprechend geformte Spanfläche -2- an. Die Wendeschneidplattenform ist positiv, das heißt, die Freifläche -3- ist unter einem Freiwinkel $\alpha$ geneigt. Wie aus Ansicht B zu ersehen ist, verläuft die Freifläche -3- leicht konvex, und zwar dermaßen, daß die Schneidkante -1- in Ansicht C gesehen, also die senkrechte Projektion der Schneidkante -1- der in Schneidposition stehenden Wendeschneidplatte auf die Ebene -E-E-, gerade verläuft. Die Ebene -E-E- verläuft im vorliegenden Fall parallel zur Grundfläche -4-des Schneideinsatzes.

Die Art der Freiflächenausbildung ist abhängig von der Größe des Freiwinkels $\alpha$ des Schneideinsatzes, wird aber in Ansicht B gesehen immer in etwa spiegelverkehrt zur in Ansicht A dargestellten Spanfläche -2- verlaufen. Je größer der Freiwinkel $\alpha$ desto ausgeprägter ist die Formgebung der Freifläche -3-. Da der Freiwinkel in der Praxis nur etwa 6° - 10° beträgt, ist die Formgebung der Freifläche nur sehr schwach ausgebildet. Die in der Figur 2b dargestellte Formgebung der Freifläche ist nicht wirklichkeitsgetreu, sondern etwas übersteigert dargestellt, um die Art der Ausgestaltung leichter erkenntlich zu machen.

Die Erfindung kann selbstverständlich nicht nur bei positiven Schneideinsätzen verwirklicht werden, sondern auch bei negativen. Bei einer negativen Geometrie muß der Schneideinsatz zur Zerspanung geneigt werden, so daß sich der erforderliche Freiwinkel $\alpha$ der Freifläche -3-ergibt. Die Freifläche ist bei Schneideinsätzen mit negativer Geometrie so an die Spanfläche angepaßt, daß bei einer Neigung dieser Schneideinsätze um den für die spanabhebende Bearbeitung vorteilhaftesten Freiwinkel $\alpha$, die senkrechte Projektion der Schneidkante auf die Ebene -E-E- eine Gerade ergibt. Die Ebene -E-E- verläuft in diesem Fall nicht parallel zur Grundfläche -4- des Schneideinsatzes, sondern ist zu dieser um den Freiwinkel $\alpha$ geneigt.

## Patentansprüche

1. Schneideinsatz der Stechbreite D zum Einstechen von Nuten mit von einer Spanfläche (2) und von einer Freifläche (3) begrenzter Schneidkante (1), wobei die Schneidkante (1) übergangslos an eine entsprechend geformte Spanfläche anschließt, wobei über die Stechbreite D die Ausgestaltungen von Freifläche und Schneidkante derart aufeinander angepaßt sind, daß die senkrechte Projektion der Schneidkante (1) auf eine Ebene (E-E) zumindest näherungsweise eine Gerade ergibt und wobei die Normale (N) zur Ebene (E-E) mit der Freifläche konstanter Neigung den für die Zerspanung vorgegebenen Freiwinkel ($\alpha$) einschließt,

   **dadurch gekennzeichnet,**

   daß sich die Schneidkante (1) kontinuierlich über die gesamte Stechbreite D erstreckt und in Stirnansicht einen konkav gekrümmten Schneidkanten-Abschnitt aufweist.

## Claims

1. A cutting insert having a cutting width D for cutting grooves by means of a cutting edge (1) defined by a chip-bearing face (2) and a flank (3), the cutting edge (1) merging without transition into a correspondingly shaped chip-bearing face, the designs of the flank and the cutting edge being adapted to one another over the cutting width D in such a manner that the vertical projection of the cutting edge (1) onto a plane (E-E) results at least approximately in a straight line and the normal (N) to the plane (E-E) together with the flank having a constant degree of inclination forming the given relief angle ($\alpha$) for the machining, characterised in that the cutting edge (1) extends continuously over the entire cutting width D and when viewed from the front has a concave cutting edge section.

**Revendications**

1. Plaquette de coupe d'une largeur de plongée (D) prévue pour la rectification de gorges par plongée, comprenant une arête de coupe (1) limitée par une face d'attaque (2) et une face de dépouille (3), l'arête de coupe (1) se raccordant sans transition à une face d'attaque de forme correspondante, les géométries de la face d'attaque et de la face de dépouille étant adaptées l'une à l'autre sur la largeur de plongée (D) d'une manière telle que la projection verticale de l'arête de coupe (1) sur un plan (E-E) forme au moins approximativement une droite, et la normale (N) au plan (E-E) incluant avec la face de dépouille d'inclinaison constante l'angle de dépouille ($\alpha$) prédéterminé pour l'enlèvement de copeaux,

   **caractérisé en ce que**

   l'arête de coupe (1) s'étend de manière continue sur toute la largeur de plongée (D) et présente, en vue de face, une partie d'arête de coupe à courbure concave.

Fig.1

Ansicht A   Ansicht B   Ansicht C

Fig. 2a   Fig.2b   Fig. 2c